Europäisches Patentamt

European Patent Office

Office européen des brevets

(19)

(11) Veröffentlichungsnummer: **0 309 861 B1**

(12) **EUROPÄISCHE PATENTSCHRIFT**

(45) Veröffentlichungstag der Patentschrift: **29.01.92**

(51) Int. Cl.⁵: **C08F 8/30**

(21) Anmeldenummer: **88115367.0**

(22) Anmeldetag: **20.09.88**

---

(54) Verfahren zur Herstellung von Kunstharzen mit anionenaustauschenden Eigenschaften.

---

(30) Priorität: **30.09.87 DE 3733033**

(43) Veröffentlichungstag der Anmeldung:
**05.04.89 Patentblatt 89/14**

(45) Bekanntmachung des Hinweises auf die
Patenterteilung:
**29.01.92 Patentblatt 92/05**

(84) Benannte Vertragsstaaten:
**DE FR GB**

(56) Entgegenhaltungen:
**US-A- 3 882 053**
**US-A- 3 925 264**
**US-A- 3 989 650**

**THE JOURNAL OF ORGANIC CHEMISTRY,
Band 37, Nr. 3, 11. Februar 1972, Seiten
391-393, Washington, D.C., US; S.L. VAIL et
al.: "Limitation for the addition of amides to
formaldehyde and glyoxal"**

(73) Patentinhaber: **BAYER AG**

**W-5090 Leverkusen 1 Bayerwerk(DE)**

(72) Erfinder: **Klipper, Reinhold Maria, Dr.
Roonstrasse 9
W-5000 Köln 50(DE)**
Erfinder: **Lange, Peter Michael, Dr.
Walter-Flex-Strasse 9
W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von Anionenaustauschern auf Basis von vernetzten, wasserunlöslichen, aromatische Kerne enthaltenden organischen Polymeren.

Es ist bekannt, Anionenaustauscher auf Basis von vernetzten, wasserunlöslichen, aromatische Kerne enthaltenden organischen Polymeren z.B. durch Amidoalkylierung besagter Polymere in Gegenwart von Quellungsmitteln und Friedel-Crafts-Katalysatoren und nachfolgende Hydrolyse der amidoalkylierten Polymere herzustellen. Als Amidoalkylierungsmittel wurden N-Halogenoalkylimide (siehe US-A-3 006 866), N-Hydroxyalkylimide (siehe US-A-3 925 264), Ester der N-Hydroxyalkylimide (siehe US-A-3 989 650) und Bis-(dicarbonimidoalkyl)-ether (siehe US-A-3 882 053 und 4 077 918) vorgeschlagen. Bevorzugt wurden Amidomethylierungsmittel wie N-Hydroxymethylphthalimid, die Ester des N-Hydroxymethylphthalimids und der Bis-(phthalimidomethyl)-ether genannt.

Ausgangsprodukt für die Herstellung dieser bevorzugten Amidomethylierungsmittel ist N-Hydroxymethylphthalimid. Diese N-Hydroxymethylphthalimid wird in der ersten Stufe der Anionenaustauscher-Herstellung durch Umsetzung von Phthalimid mit Formaldehyd in Quellungsmitteln unter Zusatz kleiner Mengen Zinkoxid (siehe US-A-3 925 264, Beispiel 1) oder Soda (siehe US-A-3 925 264, Beispiel 12 und US-A-4 007 918, Beispiel 1) erzeugt.

N-Hydroxymethylphthalimid, für andere Verwendungen als zur Herstellung von Anionenaustauschern, wird üblicherweise durch Umsetzung von Phthalimid mit Formaldehyd in wäßriger Lösung unter Verwendung von Soda oder Natronlauge als basische Kondensationsmittel hergestellt (siehe z.B. Org. Reactions 14, Seite 130 und J. Org. Chem. Vol. 37 (1972), Seiten 391-393). Überraschenderweise wurde, gefunden, daß man Anionenaustauscher auf Basis von vernetzten, wasserunlöslichen, aromatische Kerne enthaltenden organischen Polymeren mit verbesserter Totalkapazität und vor allem verbesserter mechanischer und osmotischer Stabilität erhält und außerdem die Herstellungszeit für die Anionenaustauscher wesentlich verkürzen, d.h. die Raum-Zeit-Ausbeuten der Herstellungsverfahren wesentlich erhöhen kann, wenn man bei der Umsetzung von Phthalimid und Formaldehyd im Quellungsmittel Natronlauge als basisches Kondensationsmittel verwendet und außerdem die Umsetzung innerhalb eines bestimmten pH-Wert-Bereiches vornimmt.

Obwohl bekannt war, Natronlauge als Kondensationsmittel bei der Herstellung von N-Hydroxymethylphthalimid in wäßrigen Lösungen zu verwenden, war der Ersatz der Soda durch Natronlauge bei der Herstellung von N-Hydroxymethylphthalimid für die Verwendung als Amidoalkylierungsmittel für organische Polymere, d.h. bei der Herstellung von N-Hydroxymethylphthalimid in Quellungsmitteln, in keiner Weise nahegelegt, da Soda und Natronlauge bei den Umsetzungen von Phthalimid und Formaldehyd in wäßrigen Lösungen als gleichwertige Kondensationsmittel eingesetzt wurden. Es bestand daher keine Veranlassung zu der Annahme, daß der Ersatz von Soda durch Natronlauge bei der Herstellung von N-Hydroxyphthalimid in Quellungsmittel irgendeinen Vorteil bringen könne, insbesondere war nicht zu erwarten, daß die Verwendung von Natronlauge in der ersten Verfahrensstufe des Herstellungsverfahrens zu einer Verbesserung der Stabilität der fertigen Anionenaustauscher führen könne.

Die Erfindung betrifft daher ein Verfahren zur Herstellung von Anionenaustauschern auf Basis von vernetzten, wasserunlöslichen, aromatische Kerne enthaltenden organischen Polymeren, in dem in der ersten Stufe N-Hydroxymethylphthalimid durch Umsetzung von Phthalimid mit wäßriger Formaldehydlösung in Quellungsmitteln in Gegenwart von Basen erzeugt wird; dieses N-Hydroxymethylphthalimid gegebenenfalls in einer zweiten Stufe in den Bis-(phthalimidomethyl)-ether oder einen Ester des N-Hydroxymethylphthalimids überführt wird; besagte Polymere durch Amidomethylierung mit N-Hydroxymethylphthalimid, mit Estern des N-Hydroxymethylphthalimids oder mit Bis-(phthalimidomethyl)-ether in Gegenwart von Friedel-Crafts-Katalysatoren und Quellungsmitteln amidomethyliert und die amidomethylierten Polymere abschließend zu den aminomethylierten Polymeren verseift werden, das dadurch gekennzeichnet ist, daß man in der ersten Reaktionsstufe für die Erzeugung des N-Hydroxymethylphthalimids als Base Natronlauge verwendet und diese Natronlauge in einer solchen Menge und einer solchen Geschwindigkeit zusetzt, so daß in der Reaktionsmischung ein pH-Wert im Bereich von 5 bis 6 aufrechterhalten wird.

Durch die erfindungsgemäße Maßnahme, Phthalimid und Formaldehyd im pH-Bereich von 5 bis 6 umzusetzen und diesen Bereich durch Zugabe von Natronlauge einzustellen und aufrechtzuerhalten, werden gegenüber den vorbeschriebenen Verfahren, in denen als Basen Zinkoxid und Soda verwendet werden und in denen in den Reaktionslösungen weder ein bestimmter pH-Wert eingestellt noch aufrechterhalten wird, folgende wichtigen Vorteile erreicht:

1. Die Emulsionsbildung, die bei der Verwendung von Soda im 2-Phasensystem Quellungsmittel/Wasser auftritt wird vermieden. Die das N-Hydroxymethylphthalimid enthaltende organische Phase trennt sich schnell und ohne Schwierigkeiten von der wäßrigen Phase.

2. Die Umsetzung des im Quellungsmittel, d.h. in der organischen Phase enthaltenen N-Hydroxymethylphthalimids zu den Estern oder zum Bis-(phthalimidomethyl)-ether verläuft wesentlich schneller.

3. Die Anionenaustauscher werden in einer berechenbaren, konstanten und verbesserten Basizitätsausbeute (Basizitätsausbeute = Volumen des Anionenaustauschers x Totalkapazität des Anionenaustauschers; Totalkapazität = val Aminogruppen/1 Anionenaustauscher) erhalten.

4. Die Anionenaustauscher weisen eine verbesserte mechanische und osmotische Stabilität auf.

Das erfindungsgemäße Verfahren kann im Prinzip wie folgt ausgeführt werden:

Phthalimid und 20-40 %ige wäßrige Formaldehydlösung (Molverhältnis Phthalimid : Formaldehyd etwa 1:1-1,5) werden in das Quellungsmittel eingetragen (Menge des Quellungsmittels: etwa 3-6 Gew.-Teile je Gewichtsteil Phthalimid). Die auf diese Weise erhaltene Suspension wird unter Rühren auf Temperaturen von 60 bis 80 °C erwärmt und durch Zugabe von 20 bis 50 %iger wäßriger Natronlauge auf einen pH-Wert von 5-6 eingestellt und während der Umsetzung gegebenenfalls durch Zugabe weiterer Natronlauge in diesem Bereich gehalten. Der pH-Wert wird mittels einer in die bewegte Suspension eintauchenden Elektrode bestimmt. Das Ende der Umsetzung ist daran erkennbar, daß sich die Suspension in eine trübe Lösung umgewandelt hat. Der Rührer wird abgestellt, damit sich die Phasen trennen können. Die untere, das N-Hydroxymethylphthalimid enthaltende organische Phase wird abgetrennt und getrocknet.

Die auf diese Weise erhaltene Lösung von N-Hydroxymethylphthalimid im Quellungsmittel wird entweder unmittelbar für die Amidomethylierung der vernetzten, wasserunlöslichen, aromatische Kerne enthaltenen organischen Polymeren eingesetzt oder aber das N-Hydroxymethylphthalimid wird zunächst in den Bis-(phthalimidomethyl)-ether oder in einen Ester überführt und der Ether bzw. der Ester für die Amidoalkylierungsreaktion eingesetzt. Die Amidomethylierung der organischen Polymere mit der Lösung des N-Hydroxymethylphthalimids, des Bis-(phthalimidomethyl)-ethers oder den Estern des N-Hydroxymethylphthalimids in den Quellungsmitteln erfolgt in an sich bekannter Weise z.B. nach den in den US-A-3 925 264, 3 882 053, 4 077 918 und 3 989 650 beschriebenen Arbeitsweisen.

Die Amidomethylierung der organischen Polymere sei anhand der Amidomethylierung mit dem Bis-(phthalimidomethyl)-ether (A) und anhand der Amidomethylierung mit dem Essigsäureester des N-Hydroxymethylphthalimids (B) erläutert:

A. Die in der ersten Verfahrensstufe erhaltene Lösung des N-Hydroxymethylphthalimids im Quellungsmittel wird mit katalytischen Mengen Schwefelsäure (0,07 Mol $H_2SO_4$ je Mol N-Hydroxymethylphthalimid) versetzt, unter Rühren auf Rückflußtemperatur erhitzt und solange bei dieser Temperatur gerührt, bis die Etherbildung beendet ist (der Verlauf der Etherbildung wird chromatographisch verfolgt; die Ausbeute an Ether ist annähernd quantitativ). Die nach beendeter Etherbildung vorliegende Suspension wird auf etwa Raumtemperatur abgekühlt und mit dem für die Amidomethylierung vorgesehenen Friedel-Crafts-Katalysator, z.B. Eisen-III-chlorid, Zinntetrachlorid oder, vorzugsweise, Schwefeltrioxid versetzt. In diese Mischung wird das zu amidomethylierende Polymere eingetragen (Menge an Polymer : Verhältnis Mol im Polymerisat enthaltene aromatische Kerne : Bis-(phthalimidomethyl)-ether = 1:0,5-4, vorzugsweise 1:0,75-2,5). Das Reaktionsgemisch wird unter Rühren auf Temperaturen von 65 bis 80 °C erwärmt und anschließend 18 Stunden bei dieser Temperatur gerührt. Nach dem Abkühlen auf Raumtemperatur wird das phthalimidomethylierte Polymerisat von der flüssigen Phase (dem Quellungsmittel) abgetrennt, in entsalztem Wasser aufgenommen und durch azeotrope Destillation von anhaftendem Quellungsmittel befreit. Abschließend wird das phthalimidomethylierte Polymer in bekannter Weise verseift, z.B. durch alkalische oder saure Hydrolyse oder durch Umsetzung mit Hydrazin und anschließend saure Hydrolyse gegebenenfalls in Gegenwart eines organischen Lösungsmittels; dieses organische Lösungsmittel kann z.B. das für die Amidomethylierung verwendete Quellungsmittel sein.

B. Bei der Amidomethylierung mit Estern des N-Hydroxymethylphthalimids, z.B. dem Essigsäureester, wird die in der ersten Verfahrensstufe erhaltene getrocknete Lösung des N-Hydroxymethylphthalimids im verwendeten Quellungsmittel mit der für die Veresterung erforderlichen Menge Essigsäureanhydrid versetzt und unter Rühren solange auf Rückflußtemperatur erhitzt, bis die Esterbildung beendet ist (der Verlauf der Esterbildung wird chromatographisch verfolgt; die Ausbeute an Ester ist praktisch quantitativ). Nach beendeter Veresterung wird die Lösung auf 20 bis 50 °C abgekühlt und das zu amidomethylierende organische Polymer unter Rühren eingetragen (Menge an Polymer ; Verhältnis Mol aromatische Kerne im Polymer : Mol Ester = 1:0,5-4, vorzugsweise 1:1-2,5). Das Polymerisat wird in der Esterlösung 0,5-2 Stunden bei 50 bis 70 °C eingequollen. Anschließend wird die Suspension auf Rückflußtemperatur erwärmt und mit dem vorgesehenen Friedel-Crafts-Katalysator, vorzugsweise Schwefelsäure, versetzt und anschließend 20 Stunden bei Rückflußtemperatur gerührt.

Die Aufarbeitung des Reaktionsgemisches und die Hydrolyse des phthalimidomethylierten Polymers wird wie unter A. beschrieben vorgenommen.

Als Quellungsmittel werden in dem erfindungsgemäßen Verfahren vor allem halogenierte Kohlenwasser-

EP 0 309 861 B1

stoffe wie Tetrachlorkohlenstoff, Dichlorethan, Trichlorethylen, symmetrisches Tetrachlorethan, 1,1,2-Trichlorethan, Tetrachlorethylen, Dichlorpropan, Pentachlorethan, Trichlorpropane und Tetrachlorpropane verwendet; bevorzugt wird 1,2-Dichlorethan eingesetzt.

Als vernetzte, wasserunlösliche aromatische Kerne enthaltende organische Polymere kommen vorzugsweise vinylaromatische Verbindungen in Frage, die beispielsweise bei der Mischpolymerisation von Mono- und Polyvinylverbindungen erhalten werden. Derartige Mischpolymerisate sind bekannt und werden in bekannter Weise erhalten. Die Mischpolymerisate können Gelstruktur aufweisen oder makroporös sein. Bevorzugt sind solche üblichen Mischpolymerisate, die aus einem überwiegenden Anteil an monovinylaromatischen Verbindungen und einem geringen Anteil an aromatischen oder aliphatischen Polyvinylverbindungen aufgebaut sind. Die Menge des als Vernetzungsmittel wirkenden Anteils an Polyvinylverbindungen kann innerhalb weiter Grenzen schwanken. Bei Mischpolymerisaten mit Gelstruktur werden im allgemeinen Mengen von 0,5 bis 20 Gew.-% an Polyvinylverbindungen, bevorzugt 0,5 bis 10 Gew.-% eingesetzt, während im Falle der makroporösen Mischpolymerisate Mengen von 2 bis 50 Gew.-% an Polyvinylverbindungen, bevorzugt 2 bis 20 Gew.-% bezogen auf das Gesamtgewicht der Monomere eingesetzt werden.

Als übliche monovinylaromatische Verbindungen seien beispielsweise genannt: Vinylnaphthalin, gegebenenfalls substituierte Styrole wie Vinyltoluol, Vinylanisol und Ethylstyrol; bevorzugt ist Styrol.

Als übliche Polyvinylverbindungen seien beispielsweise genannt: Divinylether, Divinylpyridin, Divinyltoluole, Divinylnaphthaline, Ethylenglykoldiacrylat, Divinylxylol, Divinylethylbenzol, Divinylsulfon, Polyvinyl- oder Polyallylether von Glykol, Glycerin und Pentaerythrit, Divinylketon, Divinylsulfid, $N,N'$-Methylendiacrylamid, $N,N'$-Methylendimethacrylamid, $N,N'$-Ethylendiacrylamid, 1,2-Di-($\alpha$-methylmethylensulfonamido)-ethylen, Trivinylbenzol, Trivinylnaphthalin, Polyvinylanthracene und Trivinylcyclohexan; bevorzugt sind Divinylbenzol und Ethylenglykoldimethacrylat. Ferner können vernetze vinylaromatische Mischpolymerisate eingesetzt werden, bei deren Herstellung bekannte Zusätze anderer Vinylverbindungen verwendet wurden, wie Methacryl- und Acrylverbindungen. Im allgemeinen sind für die Herstellung von anionenaustauschenden Kunstharzen jedoch nur Mischpolymerisate von Interesse, die die genannten Zusätze in einer Menge bis etwa 10 Gew.-%, bezogen auf das Gesamtgewicht der Monomeren, enthalten.

Bei den in den nachfolgenden Beispielen verwendeten Perlpolymerisaten A, B und C handelt es sich um folgende Mischpolymerisate:

Polymerisat A:

Perlpolymerisat aus makroporösem, mit 5 Gew.-% Divinylbenzol vernetztem Polystyrol.

Polymerisat B:

Perlpolymerisat aus makroporösem, mit 6 Gew.-% Divinylbenzol vernetztem Polystyrol.

Polymerisat C:

Perlpolymerisat aus makroporösem, mit 8 Gew.-% Divinylbenzol vernetztem Polystyrol.

Die mechanische und osmotische Stabilität der in den nachfolgenden Beispielen erhaltenen aminomethylierten Perlpolymerisate (Anionenaustauscher) wurden nach folgenden Testmethoden bestimmt:

a) Bestimmung der mechanischen Stabilität (Walzentest):

Das zu prüfende Perlpolymerisat wird in gleichmäßiger Schichtdicke zwischen zwei Kunststofftüchern verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen wird an repräsentativen Mustern durch Auszählen unter dem Mikroskop die Zahl der unversehrten (ganzen) Perlen, der gerissenen Perlen sowie der Splitter ermittelt.

b) Bestimmung der osmotischen Stabilität (Quellungsstabilität):

50 ml des zu prüfenden Polymerisates werden in einem Glasrohr 30 mal einem je 1 Stunde dauernden Beladungszyklus ausgesetzt. Der Beladungszyklus besteht aus folgenden Teilschritten: Beladen mit 0,5 n Salzsäure, Spülen mit entsalztem Wasser, Beladen mit 0,5 n Natronlauge, Spülen mit entsalztem Wasser, Anschließend wird an repräsentativen Mustern durch Auszählen unter dem Mikroskop die Zahl der unversehrten (ganzen) Perlen, der gerissenen Perlen und der Splitter ermittelt.

Beispiel 1

a. 200,4 g Phthalimid, 135,9 g (36,4 gew.%ige) Formalinlösung und 890,6 g 1,2-Dichlorethan werden bei

4

Raumtemperatur in einem Kolben miteinander vermischt und auf Rückflußtemperatur erhitzt. Dann wird der pH-Wert der Mischung durch Zutropfen von 45 gew.-%iger Natronlauge auf einen Wert von 5,5 bis 6,0 eingestellt und während der Umsetzung in diesem Bereich gehalten (der pH-Wert des Reaktionsgemischs wird mittels einer in das gerührte Gemisch eintauchenden Glas-Elektrode bestimmt). Nach etwa 5 bis 10 Minuten entsteht eine trübe Lösung, die sich nach dem Abstellen des Rührers sofort in zwei Phasen auftrennt. Die untere Phase, die Lösung des N-Hydroxymethylphthalimids in Dichlorethan, wird abgetrennt und getrocknet.

b. Die in Stufe a. erhaltene getrocknete Lösung von N-Hydroxymethylphthalimid in Dichlorethan wird mit 10,4 g (98 %iger) Schwefelsäure versetzt und 1,5 Stunden bei Rückflußtemperatur gerührt. (Ausbeute an Bis-(phthalimidomethyl)-ether: 91,5 % der Theorie). Die erhaltene Suspension wird auf 25 bis 30° C abgekühlt und mit 72 g (65 %igem) Oleum versetzt. In die Suspension werden anschließend bei 30 bis 40° C 138,4 g Polymerisat A (Korngröße: 0,3 bis 0,8 mm) eingetragen. Das Reaktionsgemisch wird 30 Minuten gerührt, dann unter Rühren auf 70° C erhitzt und weitere 18 Stunden bei dieser Temperatur gerührt. Die heiße, flüssige Phase wird abgetrennt, das Harz in entsalztem Wasser aufgenommen und durch Azeotrop-Destillation von anhaftendem Dichlorethan befreit.

Ausbeute: 600 ml

c. Die 600 ml phthalimidomethyliertes Polymerisat aus Stufe b. werden in 1280 ml 27 gew.-%iger Natronlauge eingetragen und im Autoklaven 8 Stunden bei 180° C gerührt. Das anfallende aminomethylierte Polymerisat wird mit Wasser gewaschen. Ausbeute: 437 ml

Vergleichsbeispiele α, β und γ

In den Vergleichsbeispielen α, β und γ wurde wie vorstehend unter a. - c. beschrieben gearbeitet, mit dem einzigen Unterschied, daß in Stufe a. der pH-Wert der Reaktionsmischung nicht durch Zugabe von Natronlauge auf 5,5-6,0 eingestellt und gehalten wurde, sondern daß - wie bislang übliche - zu Beginn der Umsetzung Phthalimid/Formaldehyd einmalig eine definierte Menge Soda zugesetzt wurde; und zwar

im Vergleichsbeispiel α 2,25 g Soda
im Vergleichsbeispiel β 10,5 g Soda und
im Vergleichsbeispiel γ 25 g Soda.

In der auf die Beispeile folgenden Tabelle sind der Zeitbedarf für die Bildung des Bis-(phthalimidomethyl)ethers, die Ausbeuten an amidomethyliertem Perlpolymerisat und aminomethyliertem Perlpolymerisat, die Totalkapazität des aminomethylierten Perlpolymerisates, die Basizitätsausbeute und die Ergebnisse der Stabilitätsuntersuchungen zusammengestellt.

Ergänzend sei zu den einzelnen Vergleichsbeispielen folgendes bemerkt:

In Vergleichsbeispiel α waren für die Trennung der organischen von der wäßrigen Phase 20 Minuten erforderlich.

Im Vergleichsbeispiel β dauerte die Trennung der organischen von der wäßrigen Phase 40 Minuten.

Im Vergleichsbeispiel γ hatte sich auch nach 1 Stunde noch keine klare organische Phase abgeschieden. Da bereits nach der Amidomethylierung ein großer Teil des Perpolymerisats zu Bruch gegangen war, wurde auf die Verseifung verzichtet und der Ansatz verworfen.

Beispiel 2

a. Es wurde wie in Beispiel 1 beschrieben gearbeitet mit dem Unterschied, daß statt des Beispiel 1 verwendeten Polymerisats A nunmehr 114,9 g Polymerisat B (Korngröße: 0,3-0,8 mm) verwendet wurden.

Ausbeute an amidomethyliertem Polymerisat: 690 ml.

Die 690 ml amidomethyliertes Perlpolymerisat wurden mit 1380 ml 27 gew.-%iger Natronlauge verseift.

Ausbeute 533 ml.

Vergleichsbeispiel α

In dem Vergleichsbeispiel α wurde wie vorstehend für Beispiel 2 beschrieben gearbeitet mit dem einzigen Unterschied, daß in Stufe a. der pH-Wert der Reaktionsmischung nicht durch Zugabe von Natronlauge auf 5,5 bis 6,0 eingestellt und gehalten wurde, sondern daß zu Beginn der Umsetzung Phthalimid/Formaldehyd einmalig 2,25 g Soda zugesetzt wurden.

In der auf die Beispiele folgenden Tabelle sind die Ausbedeuten an amidomethyliertem und aminomethyliertem Perlpolymerisat, die Totalkapazität des aminomethylierten Perlpolymerisates, die Basizitätsausbeute und die Ergebnisse der Stabilitätsuntersuchungen für die in Beispiel 2 und im Vergleichsbeispiel 2α erhaltenen Polymerisate zusammengestellt.

Beispiel 3

Es wird wie in Beispiel 1 beschrieben gearbeitet mit dem Unterschied, daß statt des in Beispiel 1 verwendeten Polymerisats A nunmehr 131,15 g Polymerisat C (Korngröße: 0,3-0,8 mm) verwendet wurden. Ausbeute an amidomethyliertem Harz: 690 ml.

Die 690 ml amidomethyliertes Perlpolymerisat wurden in 1380 ml 27 gew.-%iger Natronlauge unter den in Beispiel 1 beschriebenen Bedingungen verseift.

Ausbeute an aminomethyliertem Perlpolymerisat: 490 ml.

Vergleichsbeispiel α

Im Vergleichsbeispiel α wurde vorstehend wie für Beispiel 3 gearbeitet mit dem einzigen Unterschied, daß in Stufe a der pH-Wert der Reaktionsmischung nicht durch Zugabe von Natronlauge auf 5,5-6,0 eingestellt und gehalten wurde, sondern daß zu Beginn der Umsetzung Phthalimid/Formaldehyd einmalig 2,25 g Soda zugesetzt wurden.

In der auf die Beispiele folgenden Tabelle sind die Ausbeuten an amidomethylierten und aminomethylierten Perlpolymerisaten, die Totalkapazitäten der aminomethylierten Perlpolymerisate, die Basizitätsausbeuten und die Ergebnisse der Stabilitätsuntersuchungen für die im Beispiel 3 und im Vergleichsbeispiel 3α erhaltenen Polymerisate zusammengestellt.

Erläuterungen zu den in der nachfolgenden Tabelle aufgeführten Ergebnissen der Stabilitätsuntersuchungen:

Die benutzen Symbole bedeuten:

0 unversehrte Perlen

θ gerissene Perlen

Δ Splitter

In der ersten Zeile der Stabilitätsuntersuchungen ist der Zustand der Perlen vor den Stabilitätstests beschrieben, in der zweiten Zeile der Zustand der Perlen nach der mechanischen Belastung (Walzentest) und in der dritten Zeile der Zustand der Perlen nach osmotischer Belastung (Quellungsstabilitätstest).

| Beispiel | verwendete Base | Basenmenge bzw. eingest. pH-Wert | Zeitbedarf [h] für die Bildung des Bis-(phthalimido-methyl)-ethers | Ausbeute [ml] amidomethylier-tes Perlpolymerisat | Ausbeute [ml] aminomethyliert-es Perlpolymerisat | Totalkapazität [val/l] des aminomethylierten Perlpolymerisats | Basizitätsausbeute [val] | Ergebnisse der Stabilitätsuntersuchungen | | |
|---|---|---|---|---|---|---|---|---|---|---|
| | | | | | | | | 0 | $\oplus$ | $\Delta$ |
| 1 | NaOH | pH 5,5-6 | 1,5 | 600 | 437 | 2,61 | 1,141 | 99 98 98 | 0 0 1 | 1 2 1 |
| 1$\alpha$ | Na$_2$CO$_3$ | 2,25 g | 5,75 | 600 | 417 | 2,44 | 1,018 | 98 97 93 | 0 0 1 | 2 3 6 |
| 1$\beta$ | Na$_2$CO$_3$ | 10,4 g | 6,75 | 575 | 388 | 2,42 | 0,939 | 97 96 92 | 1 1 2 | 2 3 6 |
| 1$\gamma$ | Na$_2$CO$_3$ | 25,0 g | 6,00 | ~340 | - | - | - | - | - | - |
| 2 | NaOH | pH 5,5-6 | 1,5 | 690 | 533 | 2,26 | 1,204 | 99 97 99 | 0 0 0 | 1 3 1 |
| 2$\alpha$ | Na$_2$CO$_3$ | 2,25 g | 5,75 | 690 | 490 | 2,28 | 1,120 | 97 96 96 | 1 0 1 | 2 4 3 |
| 3 | NaOH | pH 5,5-6 | 1,5 | 690 | 490 | 2,45 | 1,203 | 99 97 98 | 0 0 1 | 1 3 1 |
| 3$\alpha$ | Na$_2$CO$_3$ | 2,25 g | 5,75 | 670 | 485 | 2,37 | 1,150 | 98 95 95 | 0 2 0 | 2 3 5 |

**Patentansprüche**

1. Verfahren zur Herstellung von Anionenaustauschern auf Basis von vernetzten, wasserunlöslichen, aromatische Kerne enthaltenden organischen Polymeren, in dem in der ersten Stufe N-Hydroxymethylphthalimid durch Umsetzung von Phthalimid mit wäßriger Formaldehydlösung in Quellungsmitteln in Gegenwart von Basen erzeugt wird; dieses N-Hydroxymethylphthalimid gegebenenfalls in einer 2. Stufe in den Bis-(phthalimidomethyl)-ether oder einen Ester des N-Hydroxymethylphthalimids überführt wird; besagte Polymere mit N-Hydroxymethylphthalimid, Bis-(phthalimidomethyl)-ether oder einem Ester des N-Hydroxymethylphthalimids in Gegenwart von Friedel-Craft-Katalysatoren und Quellungsmitteln amidomethyliert und die aminomethylierten Polymere abschließend zu den aminomethylierten Polymeren verseift werden, dadurch gekennzeichnet, daß man in der ersten Reaktionsstufe für die Erzeugung des N-Hydroxymethylphthalimids als Base Natronlauge verwendet und diese Natronlauge in einer solchen Menge und einer solchen Geschwindigkeit zusetzt, so daß in der Reaktionsmischung ein pH-Wert im Bereich von 5 bis 6 aufrechterhalten wird.

2. Verfahren nach Anspruch 1, dadurch gekennzeichnet, daß als Quellungsmittel 1,2-Dichlorethan verwendet wird.

3. Verfahren nach Anspruch 1, dadurch gekennzeichnet, daß als Amidomethylierungsmittel Ester des Hydroxymethylphthalimids oder Bis-(phthalimidomethyl)ether verwendet werden.

4. Verfahren nach Anspruch 1, dadurch gekennzeichnet, daß als Amidomethylierungsmittel der Essigsäureester des N-Hydroxymethylphthalimids und Schwefelsäure als Friedel-Crafts-Katalysator oder Bis-(phthalimidomethyl)-ether und Schwefeltrioxid als Friedel-Crafts-Katalysator verwendet werden.

**Claims**

1. Process for preparing anion exchangers based on crosslinked, water-insoluble organic polymers containing aromatic nuclei, in which, in the first step, N-hydroxy-methylphthalimide is produced by reaction of phthalimide with agueous formaldehyde solution in swelling agents in the presence of bases; if desired, this N-hydroxymethylphthalimide is converted in a 2nd step to the bis-(phthalimidomethyl) ether or an ester of N-hydroxymethylphthalimide; said polymers are amidomethylated with N-hydroxymethylphthalimide; bis(phthalimidomethyl) ether or an ester of N-hydroxymethylphthalimide in the presence of Friedel-Crafts catalysts and swelling agents, and the amidomethylated polymers are finally saponified to form the aminomethylated polymers, characterised in that, in the first reaction step, the base used for producing N-hydroxymethylphthalimide is sodium hydroxide solution and this sodium hydroxide solution is added in such an amount and at such a rate that a pH in the range from 5 to 6 is maintained in the reaction mixture.

2. Process according to Claim 1, characterised in that the swelling agent used is 1,2-dichloroethane.

3. Process according to Claim 1, characterised in that the amidomethylating agent used is the ester of hydroxymethylphthalimide or bis(phthalimidomethyl) ether.

4. Process according to Claim 1, characterised in that there are used as the amidomethylating agent the acetic ester of N-hydroxymethylphthalimide and sulphuric acid as the Friedel-Crafts catalyst or bis-(phthalimidomethyl) ether and sulphur trioxide as the Friedel-Crafts catalyst.

**Revendications**

1. Procédé de fabrication d'échangeurs d'anions à base de polymères organiques réticulés, non hydrosolubles, contenant des noyaux aromatiques, dans lequel au cours de la première étape du N-hydroxyméthylphtalimide est produit par réaction entre le phtalimide et une solution aqueuse de formaldéhyde dans des agents gonflants en présence de bases ; ce N-hydroxyméthylphtalimide est converti le cas échéant au cours d'une seconde étape en éther bis-(phtalimidométhylique) ou en un ester du N-hydroxyméthylphtalimide ; lesdits polymères sont amidométhylés par le N-hydroxymé-

8

EP 0 309 861 B1

thylphtalimide, l'éther bis-(phtalimidométhylique) ou un ester du N-hydroxyméthylphtalimide en présence de catalyseurs de Friedel-Crafts et d'agents gonflants et les polymères amidométhylés sont ensuite saponifiés en polymères aminométhylés, caractérisé en ce qu'on utilise au cours de la première étape de réaction pour la production du N'hydroxyméthylphtalimide de l'hydroxyde de sodium en solution comme base et qu'on ajoute cet hydroxyde de sodium en solution en une quantité et à une vitesse telles qu'on maintient dans le mélange réactionnel un pH compris dans le domaine de 5 à 6.

2. Procédé selon la revendication 1, caractérisé en ce qu'on utilise comme agent gonflant du dichloro-1,2-éthane.

3. Procédé selon la revendication 1, caractérisé en ce qu'on utilise comme agent d'amidométhylation un ester de l'hydroxyméthylphtalimide ou l'éther bis-(phtalimidométhylique).

4. Procédé selon la revendication 1, caractérisé en ce qu'on utilise comme agent d'amidométhylation l'acétate du N-hydroxyméthylphtalimide et de l'acide sulfurique comme catalyseur de Friedel-Crafts ou l'éther bis-(phtalimidométhylique) et de l'anhydride sulfurique comme catalyseur de Friedel-Crafts.